# EUROPÄISCHE PATENTANMELDUNG

(11) **EP 2 485 463 A2**
(43) Veröffentlichungstag der Anmeldung: **08.08.2012**
(21) Anmeldenummer: 12000229.0
(22) Anmeldetag: 17.01.2012
(51) Int. Cl.: H04M 1/02

(54) **Verfahren zum Einrichten eines aus mindestens einer Türstation und mindestens einer Wohnungsstation gebildeten Haus-Kommunikationssystems**

(30) Priorität: 05.02.2011 DE 102011010466
(71) Anmelder: ABB AG, 68309 Mannheim (DE)
(72) Erfinder: Bigalke, Olaf, 58638 Iserlohn (DE); Platte, Jörg, 44149 Dortmund (DE); Kruppa, Christian, 44649 Herne (DE); Zapp, Robert, 58579 Schalksmühle (DE); Schramm, Peter, 44269 Dortmund (DE)

(57) **Zusammenfassung**

Es wird ein Verfahren zum Einrichten eines aus mindestens einer Türstation und mindestens einer Wohnungsstation gebildeten Haus-Kommunikationssystems vorgeschlagen, wobei die Türstation (22) ein oder mehrere Klingelknöpfe zur Verknüpfung mit einer oder mehreren Wohnungsstationen (23 - 28) aufweist, wobei jede Station (22 ― 28) eine individuelle Identifikation aufweist und wobei alle Stationen (22 - 28) über einen gemeinsamen Bus (21) miteinander verbunden sind. Insbesondere ist es vorgesehen, dass ein Projektierungstool für das Einrichten vorgesehen ist und dass nach erfolgter Installation folgende Schrittfolge abgearbeitet wird:
● in einem ersten Schritt werden seitens des Projektierungstools sämtliche Stationen (22 ― 28) des Systems erfasst und über eine eindeutige Identifikation (ID) gekennzeichnet,
● in einem zweiten Schritt werden in einem Programmfenster (1) des Projektierungstools mindestens ein Türstations-Symbol (2) mit allen Klingelknopf-Symbolen (3 - 8) sowie alle Wohnungsstations-Symbole (9 ― 14) grafisch dargestellt,
● in einem dritten Schritt werden seitens des Benutzers gewünschte Zuordnungen (15 - 20) zwischen einem bestimmten Wohnungsstations-Symbol (9 - 14) und einem bestimmten Klingelknopf-Symbol (3 - 8) des Türstations-Symbols (2) vorgenommen,
● in einem vierten Schritt wird die derart erfolgte Projektierung auf mindestens eine Station des Haus-Kommunikationssystems übertragen.

## Beschreibung

Die Erfindung betrifft ein Verfahren zum Einrichten eines aus mindestens einer Türstation und mindestens einer Wohnungsstation gebildeten Haus-Kommunikationssystems, wobei die Türstation ein oder mehrere Klingelknöpfe zur Verknüpfung mit einer oder mehreren Wohnungsstationen aufweist, wobei jede Station eine individuelle Identifikation aufweist und wobei alle Stationen über einen gemeinsamen Bus miteinander verbunden sind. Mit dem Begriff "Einrichten" wird die Zuordnung einer jeden Wohnungsstation zu einem speziellen Klingelknopf einer Türstation gekennzeichnet.

Moderne Haus-Kommunikationssysteme basieren auf einer Bustopologie. Es existiert keine dedizierte Verbindung zwischen Wohnungsstationen respektive Innenstellen und Türstation(en) respektive Außenstelle(n) mehr. Durch die Bustopologie ist eine logische Zuordnung der Klingelköpfe der Türstation(en) zu der gewünschten Wohnungsstation unerlässlich.

Es existieren unterschiedliche Verfahren für die Zuordnung von Wohnungsstationen zu einer Türstation im Bereich der Haus-Kommunikationssysteme:
● Zuordnung durch Drücken eines bestimmten Klingelknopfes (Ruftaste) der Türstation und einer zugehörigen Taste der Wohnungsstation.
● Drücken der Klingelknöpfe der Türstation in einer definierten Reihenfolge und Zuordnung der Wohnungsstationen durch Drücken einer Taste bzw. Aktivieren der Wohnungsstationen in derselben Reihenfolge.
● Zuordnung über eine Konfigurationssoftware.

Aus der EP 1 480 432 B1 ist ein Verfahren zum Einrichten einer Hauskommunikationsanlage mit mehreren Wohnungsstationen, mindestens einer Türstation mit Rufeinrichtungen und einem Bus zum Verbinden der Stationen miteinander bekannt, wobei gemäß einem ersten Schritt die Türstation an den Bus angeschlossen wird, gemäß einem zweiten Schritt eine erste Wohnungsstation an den Bus angeschlossen wird, gemäß einem dritten Schritt die Wohnungsstation auf das Anschließen an den Bus anspricht und ein Anmeldesignal abgibt, gemäß einem vierten Schritt ansprechend auf das Anmeldesignal eine erste Rufadresse sowohl der Wohnungsstation als auch einer ersten Rufeinrichtung zugeordnet wird, gemäß einem fünften Schritt eine weitere Wohnungsstation an den Bus angeschlossen wird und gemäß weiteren Schritten eine Wiederholung der vorstehenden Schritte erfolgt, bis allen Wohnungsstationen eine Rufadresse zugeordnet ist.

Aus der DE 102 53 308 B4 ist ein Verfahren zur Inbetriebnahme einer Hauskommunikationsanlage mit mindestens einer Türstation und einer beliebigen Anzahl von Wohnungsstationen bekannt, wobei alle Stationen über einen gemeinsamen Bus verbunden sind und wobei die Türstation eine Anzahl von den Wohnungsstationen zuzuordnenden Ruftasten aufweist. Zur Programmierung der Zuordnung zwischen den Ruftasten und den Wohnungsstationen ist die Anlage zeitweise in einen Programmiermodus schaltbar. Im Programmiermodus werden zunächst die zu programmierenden Ruftasten der Türstation in einer beliebig gewählten Reihenfolge nacheinander betätigt, wodurch tastenspezifische Adressen entsprechend dieser Reihenfolge separat nacheinander abrufbar in einem Speicher abgelegt werden. Anschließend werden entsprechend der gewünschten Ruftasten-Zuordnung die einzelnen Wohnungsstationen nacheinander in der Reihenfolge der abgelegten Adressen auf die jeweilige Ruftaste programmiert, indem an jeder Wohnungsstation durch Betätigen eines zugehörigen Schaltelementes die entsprechend der abgelegten Reihenfolge jeweils nächste tastenspezifische Adresse aus dem Speicher abgerufen und abgelegt wird.

Der Erfindung liegt die Aufgabe zugrunde, ein optimiertes Verfahren zum Einrichten eines aus mindestens einer Türstation und mindestens einer Wohnungsstation gebildeten Haus-Kommunikationssystems anzugeben.

Diese Aufgabe wird in Verbindung mit den Merkmalen des Oberbegriffes erfindungsgemäß dadurch gelöst, dass ein Projektierungstool für das Einrichten vorgesehen ist und nach erfolgter Installation folgende Schrittfolge abgearbeitet wird:
● in einem ersten Schritt werden seitens des Projektierungstools sämtliche Stationen des Systems erfasst und über eine eindeutige Identifikation gekennzeichnet,
● in einem zweiten Schritt werden in einem Programmfenster des Projektierungstools mindestens ein Türstations-Symbol mit allen Klingelknopf-Symbolen sowie alle Wohnungsstations-Symbole grafisch dargestellt,
● in einem dritten Schritt werden seitens des Benutzers gewünschte Zuordnungen zwischen einem bestimmten Wohnungsstations-Symbol und einem bestimmten Klingelknopf-Symbol des Türstations-Symbols vorgenommen,
● in einem vierten Schritt wird die derart erfolgte Projektierung auf mindestens eine Station des Haus-Kommunikationssystems übertragen.

Dabei sind auch Mehrfach-Verknüpfungen zwischen Klingelknopf-Symbolen und Wohnungsstations-Symbol realisierbar, beispielsweise kann ein Klingelknopf-Symbol mit mehreren Wohnungsstations-Symbolen verknüpft werden.

Zweckmäßig kann dabei die Erfassung der Stationen gemäß einem Netzwerk-Discovery-Mechanismus, insbesondere gemäß Universal Plug and Play, erfolgen.

Vorteilhaft kann das Projektierungstool auf einem externen Rechner ausgeführt werden.

Die Übertragung der mittels des Projektierungstools erfolgten Projektierung kann alternativ
● per direktem Upload über eine Datennetzwerkverbindung oder
● über ein zwischengeschaltetes Speichermedium, wie eine Speicherkarte,

zu mindestens einer Station oder dem Systemgerät 40 des Haus-Kommunikationssystems erfolgen.

In vorteilhafter Weise können den eindeutigen Identifikationen seitens des Benutzers benutzerfreundlicheNamen, wie Einbauort und/oder Name des betreffenden Wohnungs-Bewohners zugewiesen werden.

Das Projektierungstool kann zur Kontrolle einer durchgeführten Zuordnung zwischen einem Klingelknopf-Symbol und einem Wohnungsstations-Symbol in zweckmäßiger Weise eine Signalisierungseinrichtung der betroffenen Wohnungsstation des Haus-Kommunikationssystems ansteuern.

Das Projektierungstool kann web-basiert sein, wobei sich der Webserver mit dem auszuführenden Projektierungstool in vorteilhafter Weise auf einer Station oder einem Systemgerät des Haus-Kommunikationssystems befindet.

Die mit der Erfindung erzielbaren Vorteile bestehen insbesondere darin, dass das Auffinden von Stationen im Netzwerk und die Zuordnung zwischen Klingelknöpfen zu den Wohnungsstationen auch bei komplexeren Haus-Kommunikationssystemen in einfacher, wenig umständlicher Weise und mit niedrigem Aufwand erfolgen können. Diese Zuordnung wird z. B. durch Verfahren wie Auto-Discovery sowie Drag & Drop erleichtert.

Die Erfindung wird nachstehend anhand der in der Zeichnung dargestellten Ausführungsbeispiele erläutert. Es zeigen:
- Fig. 1: eine schematische Anordnung eines Haus-Kommunikationssystems mit Einbindung eines Projektierungstool,
- Fig. 2: eine alternative Möglichkeit der Übertragung einer durchgeführten Projektierung,
- Fig. 3: eine alternative Möglichkeit zur Einbindung des Projektierungstool.

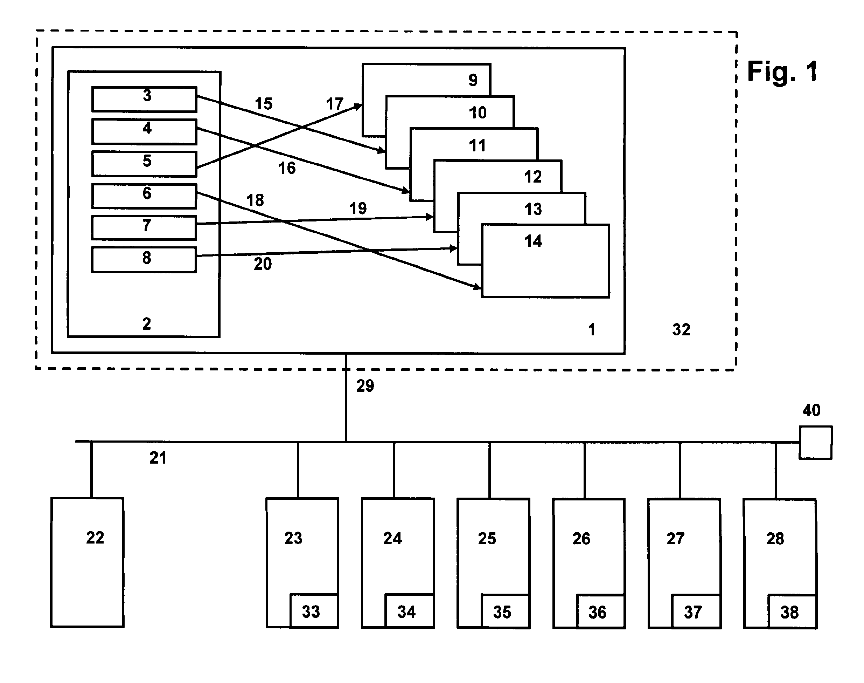

In Fig. 1 ist eine schematische Anordnung eines Haus-Kommunikationssystems mit Einbindung eines Projektierungstool dargestellt. Es ist eine Türstation 22 zu erkennen, welche mit mehreren Wohnungsstationen - im betrachteten Ausführungsbeispiel mit sechs Wohnungsstationen 23, 24, 25, 26, 27, 28 - über einen allen Stationen 22 - 28 gemeinsamen Bus 21 verbunden ist. Selbstverständlich können auch mehrere Türstationen vorgesehen sein. Darüber hinaus kann zusätzlich ein Systemgerät 40 vorgesehen sein. Die Türstation 22 weist mehrere Klingelknöpfe auf, deren Anzahl der Anzahl der Wohnungsstationen 23 - 28 entspricht. Jedem Klingelknopf kann, muss jedoch nicht, ein Namensschild für die Kennzeichnung des Bewohners zugeordnet sein. Die Wohnungsstationen 23, 24, 25, 26, 27, 28 weisen jeweils eine Signalisierungseinrichtung 33, 34, 35, 36, 37, 38 auf, welche z. B. in Form einer Lampe oder eines Lautsprechers ausgebildet ist.

Zum Einrichten des Haus-Kommunikationssystems ist ein Projektierungstool vorgesehen, welches z. B. auf einem herkömmlichen Rechner 32, wie einem PC oder einem Laptop, installiert ist. Ein Programmfenster 1 dieses Projektierungstools zeigt korrespondierend zum oben erläutertem Haus-Kommunikationssystem
● ein Türstations-Symbol 2 mit Klingelknopf-Symbolen 3, 4, 5, 6, 7, 8,
● Wohnungsstations-Symbole 9, 10, 11, 12, 13, 14 sowie
● Zuordnungen 15, 16, 17, 18, 19, 20 zwischen jeweils einem Klingelknopf-Symbol und jeweils einem zugeordneten Wohnungsstations-Symbol.

Während der Projektierung ist der Rechner 32 mit dem Projektierungstool über eine Datennetzwerkverbindung 29 mit dem Haus-Kommunikationssystem verbunden. Nach erfolgter Projektierung kann diese Datennetzwerkverbindung 29 wieder entfernt werden.

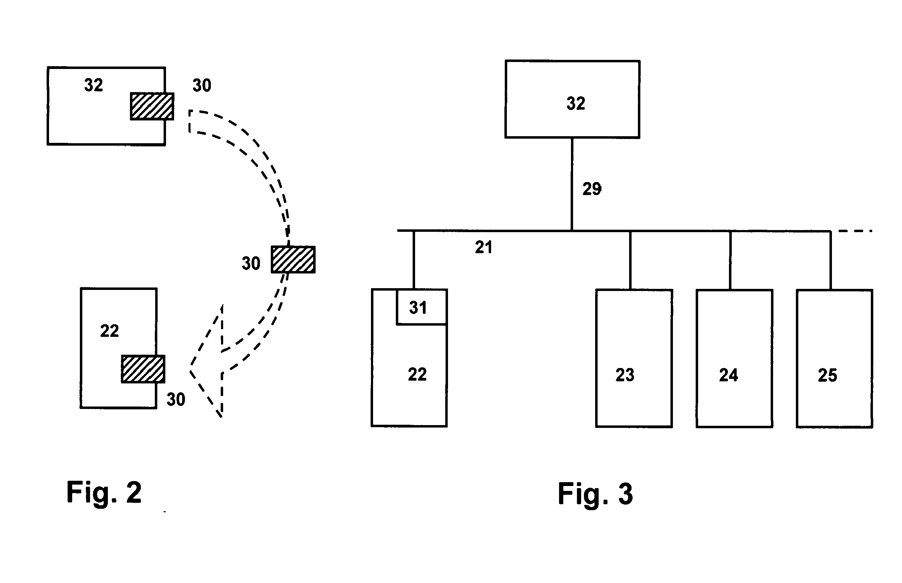

In Fig. 2 ist eine alternative Möglichkeit der Übertragung einer durchgeführten Projektierung dargestellt. Bei dieser Möglichkeit wird die unter Einsatz des Rechners 32 und des Projektierungstools durchgeführte Projektierung in einem Speichermedium 30, wie Speicherkarte, abgespeichert (unter Verwendung eines Kartenschreibers), welche anschließend dem Haus-Kommunikationssystem, z. B. dessen Türstation 22, (z. B. einem darin integrierten Kartenleser) oder dem Systemgerät 40 zugeführt wird.

In Fig. 3 ist eine weitere Möglichkeit der Einbindung des Projektierungstool dargestellt. Bei dieser Möglichkeit weist zusätzlich zu der in Fig. 1 gezeigten Konfiguration eine der Stationen des Haus-Kommunikationssystems, z. B. die Türstation 22, einen Webserver 31 auf, welcher über den Bus 21 und die Datennetzwerkverbindung 29 mit dem Rechner 32 kommunizieren kann.

Die Konfiguration des aus den Stationen Türstation 22 Wohnungsstationen 23 ― 28 usw. und gegebenenfalls einem Systemgerät bestehenden Haus-Kommunikationssystems wird mit Hilfe einer speziellen Software-Applikation, dem Projektierungstool, durchgeführt. Die Software-Applikation respektive das Projektierungstool kann z. B. auf einem herkömmlichen PC bzw. Notebook ausgeführt werden, wie auf dem Rechner 32. Die Projektierung wird vorzugsweise offline, d. h. ohne dauerhaft bestehende Datennetzwerkverbindung 29 zu den Stationen 22 - 28 innerhalb des Projektierungstools durchgeführt und anschließend auf eine Station des Haus-Kommunikationssystems, vorzugsweise die Türstation 22, übertragen.

Die Übertragung zum Haus-Kommunikationssystem kann dabei auf zwei Wegen erfolgen:
● Per direktem Upload über die Datennetzwerkverbindung 29 vom Projektierungstool des Rechners 32 auf die Stationen (oder auf mindestens eine der Stationen des Haus-Kommunikationssystems), wie in Fig. 1 gezeigt.
● Durch Übertragung vom Projektierungstool auf das Speichermedium 30 und anschließende Übertragung vom Speichermedium 30 auf die Stationen (oder auf mindestens eine der Stationen des Haus-Kommunikationssystems oder auf das Systemgerät 40), wie in Fig. 2 gezeigt.

Zur Durchführung der Projektierung müssen dem Projektierungstool sämtliche Stationen 22 - 28 respektive Systemgeräte des Haus-Kommunikationssystems bekannt sein. Um die Stationen 22 - 28 des Haus-Kommunikationssystems dem Projektierungstool bekannt zu machen, kann vorteilhaft die Verwendung von Netzwerk(Network)-Discovery-Mechanismen, wie z. B. Universal Plug and Play (UPnP) vorgesehen sein. Die auf diese Weise ermittelten Stationen 22 - 28 werden innerhalb des Projektierungstools grafisch dargestellt, z. B. werden die Türstation(en) links angeordnet und die Wohnungsstationen rechts angeordnet, wie dies im Programmfenster 1 gezeigt ist. Jede Station des Haus-Kommunikationssystems ist dabei über eine eindeutige Identifikation (ID), z. B. die Seriennummer der jeweiligen Station, gekennzeichnet. Die Klingelknöpfe einer Türstation werden einzeln dargestellt, wie dies ebenfalls in Fig. 1 gezeigt ist.

Es kann zusätzlich vorgesehen sein, dass die jeweilige eindeutige Identifikation (ID) auf der jeweiligen Station des Haus-Kommunikationssystems vermerkt ist - z. B. durch einen Aufkleber. Der Benutzer kann sich so in einfacher Weise auf diesem Aufkleber notieren, welche Station zu welcher Wohneinheit gehört, z. B. ID:334522 → 1. OG rechts, "Fam. Maier".

Zu diesem Zweck ist es vorteilhaft möglich, Aufkleber einzusetzen, die einen ablösbaren Teil besitzen, auf denen die Seriennummer (zusätzlich zur Seriennummer auf der Station) verzeichnet ist und auf dem Notizen, wie z. B. der Name des Mieters oder der Einbauort vom Benutzer direkt vorgenommen werden können.

Der Benutzer hat nun gemäß einem optionalen Projektierungsschritt die Möglichkeit, den im Projektierungstool dargestellten Stationen benutzerfreundliche Namen, z. B.

Einbauort, Name des Mieters, zuzuordnen, um auf diese Weise die Übersichtlichkeit der Projektierung zu erhöhen. Diese optionale Namenszuordnung erfolgt anhand der zuvor erstellten Notizen. Somit ist eine Wohnungsstation des Haus-Kommunikationssystems z. B. nicht mehr nur durch ihre eindeutige Identifikation (im vorstehend Beispiel 334522) dargestellt, sondern durch (ID), Einbauort und Name (im o. g. Beispiel "ID:334522, 1. OG rechts, Fam. Maier").

Um sicher zu stellen, dass die Zuordnung von eindeutiger Identifikation (ID) zum benutzerfreundlichen Namen korrekt durchgeführt worden ist, kann folgende Zusatzfunktion des Projektierungstools vorgesehen sein:

Jede der Stationen 23 - 28 des Haus-Kommunikationssystems wird über das Projektierungstool nacheinander aufgefordert, sich audiovisuell bemerkbar zu machen. Dadurch wird bewirkt, dass die ausgewählte Station 23 - 28 z. B. durch ein optisches Blinksignal und/oder ein akustisches Signal (z. B. Klingelton) auf sich aufmerksam macht. Das Signal wird vom Benutzer registriert und entweder durch einen Timeout, d. h. Abschalten nach Zeitablauf, oder durch manuelle Bestätigung an der jeweiligen Station 23 - 28 beendet.

Sobald die vorstehend beschriebene (optionale) Namenszuordnung erfolgt ist, kann der Benutzer die einzelnen Wohnungsstationen den einzelnen Klingelknöpfen einer jeweiligen Türstation zuweisen, siehe die Zuordnungen 15 - 20 im Programmfenster 1. Hierzu kann vorteilhaft die Drag&Drop-Technologie verwendet werden, d. h. dargestellte Wohnungsstationen werden auf dargestellte Klingelknöpfe gezogen und abgelegt. Alternativ können die Zuordnungen 15 - 20 über die Markierung einer bestimmten Wohnungsstation und anschließende Markierung eines bestimmten Klingelknopfes erfolgen.

Alternativ zur Installation des Projektierungstool auf einem PC oder Notebook kann das Projektierungstool selbst auch web-basiert sein, d. h. auf einem Web-Server ausgeführt und der Zugang über einen Web-Browser erfolgen. Der entsprechende Web-Server 31 kann sich auf einem der Geräte, z. B. auf der Türstation 22 oder dem Systemgerät 40 befinden, wie dies in Fig. 3 gezeigt ist. Der Web-Browser befindet sich z. B. auf dem externen Rechner 32.

### Bezugszeichenliste

- 1: Programmfenster des Projektierungstoois,
- 2: Türstations-Symbol
- 3: Klingelknopf-Symbol
- 4: Klingelknopf-Symbol
- 5: Klingelknopf-Symbol
- 6: Klingelknopf-Symbol
- 7: Klingelknopf-Symbol
- 8: Klingelknopf-Symbol
- 9: Wohnungsstations-Symbol
- 10: Wohnungsstations-Symbol
- 11: Wohnungsstations-Symbol
- 12: Wohnungsstations-Symbol
- 13: Wohnungsstations-Symbol
- 14: Wohnungsstations-Symbol
- 15: Zuordnung
- 16: Zuordnung
- 17: Zuordnung
- 18: Zuordnung
- 19: Zuordnung
- 20: Zuordnung
- 21: Bus
- 22: Türstation
- 23: Wohnungsstation
- 24: Wohnungsstation
- 25: Wohnungsstation
- 26: Wohnungsstation
- 27: Wohnungsstation
- 28: Wohnungsstation
- 29: Datennetzwerkverbindung
- 30: Speichermedium, Speicherkarte
- 31: Webserver
- 32: Rechner, PC, Notebook
- 33: Signalisierungseinrichtung (Lampe oder Lautsprecher)
- 34: Signalisierungseinrichtung (Lampe oder Lautsprecher)
- 35: Signalisierungseinrichtung (Lampe oder Lautsprecher)
- 36: Signalisierungseinrichtung (Lampe oder Lautsprecher)
- 37: Signalisierungseinrichtung (Lampe oder Lautsprecher)
- 38: Signalisierungseinrichtung (Lampe oder Lautsprecher)
- 39: -
- 40: Systemgerät

## Patentansprüche

1. Verfahren zum Einrichten eines aus mindestens einer Türstation (22) und mindesten einer Wohnungsstation (23 - 28) gebildeten Haus-Kommunikationssystems, wobei die Türstation (22) ein oder mehrere Klingelknöpfe zur Verknüpfung mit einer oder mehreren Wohnungsstationen (23 - 28) aufweist, wobei jede Station (22 ― 28) eine individuelle Identifikation aufweist und wobei alle Stationen (22 - 28) über einen gemeinsamen Bus (21) miteinander verbunden sind,
**dadurch gekennzeichnet, dass** ein Projektierungstool für das Einrichten vorgesehen ist und nach erfolgter Installation folgende Schrittfolge abgearbeitet wird:
● in einem ersten Schritt werden seitens des Projektierungstools sämtliche Stationen (22 - 28) des Systems erfasst und über eine eindeutige Identifikation (ID) gekennzeichnet,
● in einem zweiten Schritt werden in einem Programmfenster (1) des Projektierungstools mindestens ein Türstations-Symbol (2) mit allen Klingelknopf-Symbolen (3 - 8) sowie alle Wohnungsstations-Symbole (9 ― 14) grafisch dargestellt,
● in einem dritten Schritt werden seitens des Benutzers gewünschte Zuordnungen (15 - 20) zwischen einem bestimmten Wohnungsstations-Symbol (9 ― 14) und einem bestimmten Klingelknopf-Symbol (3 - 8) des Türstations-Symbols (2) vorgenommen,
● in einem vierten Schritt wird die derart erfolgte Projektierung auf mindestens eine Station des Haus-Kommunikationssystems übertragen.

2. Verfahren nach Anspruch 1, **gekennzeichnet durch** Mehrfach-Verknüpfungen zwischen Klingelknopf-Symbolen (3 - 8) und Wohnungsstations-Symbol (9 - 14).

3. Verfahren nach Anspruch 1 oder 2, **dadurch gekennzeichnet, dass** die Erfassung der Stationen (22 - 28) gemäß einem Netzwerk-Discovery-Mechanismus, insbesondere gemäß Universal Plug and Play (UPnP), erfolgt.

4. Verfahren nach einem der vorstehenden Ansprüche, **dadurch gekennzeichnet, dass** das Projektierungstool auf einem externen Rechner (32) ausgeführt wird.

5. Verfahren nach einem der vorstehenden Ansprüche, **dadurch gekennzeichnet, dass** die Übertragung der mittels des Projektierungstools erfolgten Projektierung per direktem Upload über eine Datennetzwerkverbindung (29) zu mindestens einer Station (22 - 28) oder einem Systemgerät (40) erfolgt.

6. Verfahren nach einem der vorstehenden Ansprüche, **dadurch gekennzeichnet, dass** die Übertragung der mittels des Projektierungstools erfolgten Projektierung über ein zwischengeschaltetes Speichermedium (30), wie eine Speicherkarte, zu mindestens einer Station (22 - 28) oder einem Systemgerät (40) erfolgt.

7. Verfahren nach einem der vorstehenden Ansprüche, **dadurch gekennzeichnet, dass** den eindeutigen Identifikationen (ID) seitens des Benutzers benutzerfreundliche Namen, wie Einbauort und/oder Name des betreffenden Wohnungs-Bewohners zugewiesen werden.

8. Verfahren nach einem der vorstehenden Ansprüche, **dadurch gekennzeichnet, dass** das Projektierungstool zur Kontrolle einer durchgeführten Zuordnung zwischen einem Klingelknopf-Symbol (3 - 8) und einem Wohnungsstations-Symbol (9 ― 14) eine Signalisierungseinrichtung (33 - 38) der betroffenen Wohnungsstation (23 - 28) ansteuert.

9. Verfahren nach einem der vorstehenden Ansprüche, **dadurch gekennzeichnet, dass** das Projektierungstool web-basiert ist und sich der Webserver (31) mit dem auszuführenden Projektierungstool auf einer Station (22 - 28) oder einem Systemgerät (40) des Haus-Kommunikationssystems befindet.
